# EUROPÄISCHE PATENTSCHRIFT

(11) **EP 0 513 951 B1**
(45) Veröffentlichungstag und Bekanntmachung des Hinweises auf die Patenterteilung: **12.06.1996**
(21) Anmeldenummer: 92250113.5
(22) Anmeldetag: 08.05.1992
(51) Int. Cl.: B29C 45/17

(54) **Werkzeugdrehsicherung**
Mould rotation preventing means
Moyens de blocage en rotation pour moule

(30) Priorität: 13.05.1991 DE 4115957
(43) Veröffentlichungstag der Anmeldung: 19.11.1992
(73) Patentinhaber: MANNESMANN Aktiengesellschaft, D-40027 Düsseldorf (DE)
(72) Erfinder: Bertleff, Wolfgang, W-8560 Lauf a.d. Pegnitz (DE)
(74) Vertreter: Meissner, Peter E., Dipl.-Ing.

(56) Entgegenhaltungen:
- EP-A- 0 092 686
- EP-A- 0 183 944
- DE-A- 3 836 986

## Beschreibung

Die Erfindung betrifft eine Spritzgießmaschine nach den Oberbegriff des Anspruchs 1.

Derartige Spritzgießmaschinen weisen Werkzeugaufspannplatten auf, zwischen denen ein Werkzeugblock klemmbar ist. Beim Ein- bzw. Ausbau des Werkzeugs werden die Aufspannplatten zu- bzw. aufgefahren. Solange keine Plattenberührung vorhanden ist, neigt das Werkzeug dazu, sich zu verdrehen oder zu kippen. Insbesondere beim Einbau muß das Werkzeug zwischen die Aufspannplatten eingeführt werden, dort sorgfältig zentriert und außerhalb der Verfahrrichtung ohne Positionsänderung gehalten werden. Darüber hinaus soll bei geringstem Aufwand ein sicheres Kuppeln der Energieleitungen durchgeführt werden.

Aus DE-OS 38 36 986 ist eine Spritzgießmaschine bekannt mit einem Spritzwerkzeug, welches eine Werkzeuganlageplatte aufweist, die mit ihrem unteren Rand auf Horizonalachsenrollen der Werkzeugaufnahme aufliegt und mit einem ihrer seitlichen Ränder an einen seitlichen Anschlag der Werkzeugaufnahme anliegt.

Nachteil dieser Ausführung ist das zeitaufwendige und schwierige Einfädeln der Werkzeuganlageplatte in die Führung. Darüber hinaus weist die relativ aufwendig konstruierte Führung ein so großes Spiel auf, daß ein exaktes Verhindern das Kippens oder Verdrehens des Werkzeugs nicht möglich ist.

Aus EP A1 0 314 794 sind motorisch betriebene Klemmkeile bekannt, die senkrecht zur Mittenachse bewegbar sind und das Werkzeug an der Anlageplatte angreifen. Die Gleitfläche der Keile bzw. der Anlageplatte weisen in Richtung Aufspannplatte von der Mittenachse weg. Durch Lage und Größe der Flächen ist aber nur ein grobes Zentrieren des Werkzeugblocks möglich.

Aus der EP-A-0092686 ist eine Werkzeugwechselvorrichtung bekannt,bei der die Adapterplatte mit dem Formwerkzeug durch Einschubführungen sowohl parallel als auch quer zur Einschubrichtung exakt gegen die stationäre Formaufspannplatte zentriert und ausgerichtet wird.

Die Erfindung widmet sich dem Problem, einen störungsfreien teil- bzw. vollautomatisierten Werkzeugwechsel durchführen zu können, bei dem in jeder Phase der Wechselarbeit das Werkzeug definiert in der gewünschten Lage gehalten wird.

Gelöst wird diese Aufgabe durch die kennzeichnenden Merkmale des Vorrichtungsanspruchs 1.

Das Werkzeug wird dabei mit seiner Werkzeuganlageplatte in mindestens einer Führungsklaue eingeführt. Diese Führungsklaue greift die Werkzeuganlageplatte formschlüssig und hält sie definiert parallel zur Aufspannplatte während der axialen Bewegung des Werkzeugs. Dieses sichere Greifen wird solange aufrechterhalten, bis am Werkzeug vorgesehene Zentrierelemente mit an der Maschine vorgesehenen Zentrierbohrungen in Eingriff kommen. Der Formschluß zwischen der Führungsklaue und Werkzeuganlageplatte wird aufgehoben, und die Plattenberührung kann unmittelbar erfolgen. Das Lösen des Griffes durch die Führungsklaue wird erreicht durch eine gegenüber der Werkzeugbewegungsrichtung geneigte Verschiebeachse, auf der die Führungsklaue mit der Werkzeugbewegung gleichzeitig senkrecht zur Mittenachse verschoben wird. Durch unterschiedliche Flankenlängen ist ein Lösen der Anlageplatte von der Führungsklaue in einfacher Weise möglich. Es liegt eine reine Zwangsführung vor, so daß keine Ansteuerung und keine Endlagenabfrage erforderlich ist.

Ein weiterer Vorteil ist darin zu sehen, daß die Energieversorgungskupplungen zwangsgesteuert miteinander gekoppelt werden. Hierdurch ist ein verschleißarmes und dabei sicheres Kuppeln möglich.

Die geometrischen verhältnisse sind jeweils so gewählt, daß beim Wechsel des Werkzeugs immer nur ein Freiheitsgrad zugelassen wird. Eine Überbestimmung der geometrischen verhältnisse wird dadurch vermieden, daß unmittelbar vor dem Klemmvorgang das Werkzeug zwischen den Aufspannplatten die Führung des Werkzeugblocks von der üblicherweise vorhandenen Zentrierung übernommen wird.

Die einfachen und dabei wenig Bauraum einnehmenden Führungselemente lassen sich bei vorhandenen Maschinen nachrüsten. Das separat ausführbare Bauteil läßt sich ohne Behinderung der übrigen Baugruppen an vorhandenen Spritzgießmaschien einbauen, u.z. sowohl bei Maschinen mit horizontalen wie auch vertikalen Werkzeugwechseleinrichtungen.

Ein Beispiel der Erfindung ist in der Zeichnung dargelegt. Dabei zeigen:
Fig. 1 die Werkzeugwechseleinrichtung in geöffnetem Zustand,
Fig. 2 die Werkzeugwechseleinrichtung während des Zufahrens,
Fig. 3 die Werkzeugwechseleinrichtung in eingebautem Zustand,
Fig. 4 einen Greifer.

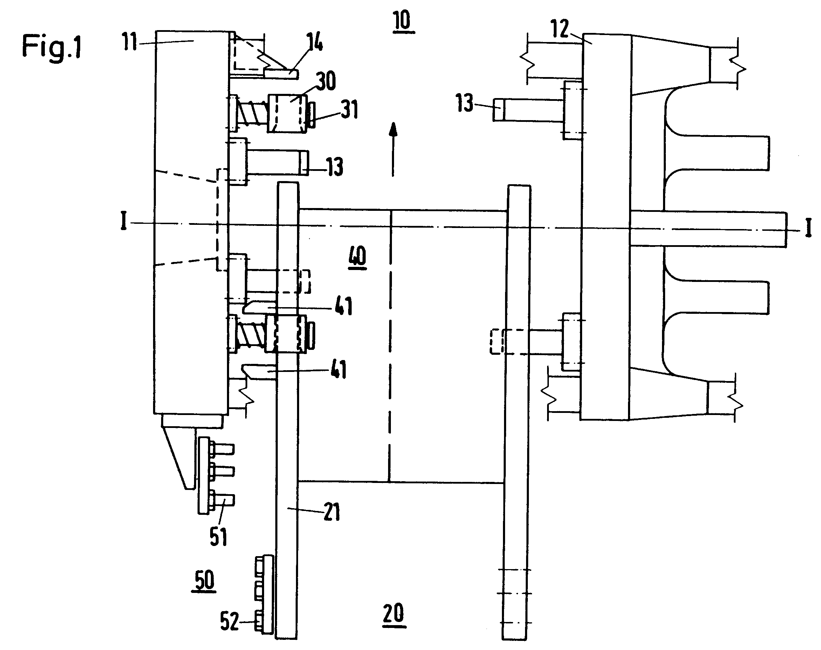

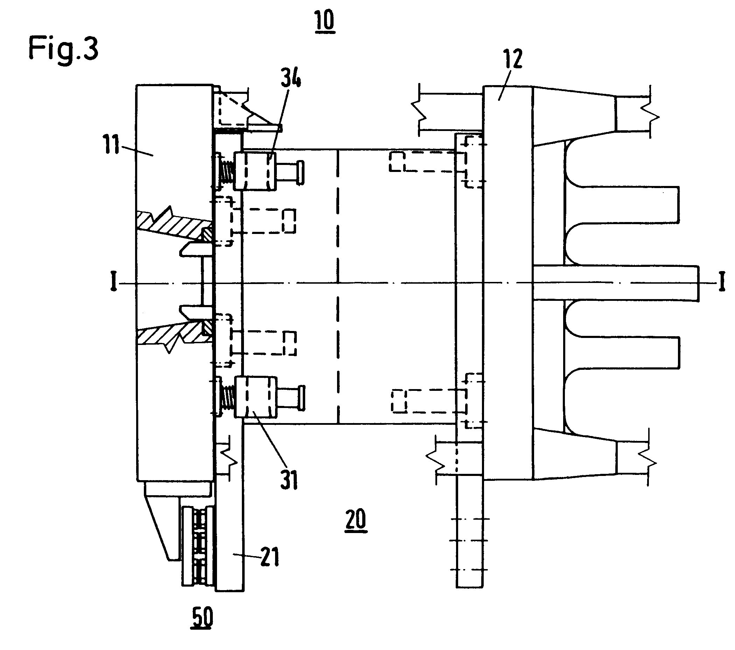

In den Fig. 1 und 3 ist ein waagerechter Werkzeugeinbau in die Spritzgießmaschine dargestellt, der von beiden Seiten her möglich ist. Zu sehen ist jeweils die Draufsicht auf das Werkzeug und die Schließeinheit der Spritzgießmaschine.

Entsprechendes gilt für einen Vertikalwerkzeugein- sowie -ausbau.

Die Fig. 1 zeigt den Einschub des Werkzeugblocks 20 zwischen die Aufspannplatten 11 und 12 der Spritzgießmaschine. Innerhalb der Schließeinheit 10 wird das Werkzeug 20 von unten durch die angedeuteten Werkzeugauflagekonsolen 13 abgestützt. Seitlich an der festen Aufspannplatte 11 ist eine fest montierte Energieversorgungskupplung 50 mit eingebauten Kupplungsnippeln 51 dargestellt. Auf eine Darstellung der Versorgungskupplungen an der beweglichen Ausspannplatte wurde verzichtet.

Beim Einfahren des Werkzeugblockes ist von der festen und der beweglichen Aufspannplatte 11 und 12 gerade ein solcher Einfahrabstand einzuhalten, bei dem die Kupplungsnippel 51 beim Einfahren nicht mit den Gegenstücken 52 am Werkzeugblock kollidieren.

Während des Werkzeugeinschubs wird die der festen Aufspannplatte 11 zugewandte Anlageplatte 21 des Werkzeugblocks 20 in die Führungsklauen 31 des Greifers 30 eingefädelt. Hiermit wird ein Formschluß mit dem Werkzeugblock 20 in Richtung der Maschinennauptachse oder Mittenachse I hergestellt. Druckfedern 33 zwischen der festen Aufspannplatte 11 und den Führungsklauen 31 halten letztere dabei in definierter Einschubposition.

Das Werkzeug wird bis auf Anschlag an der Konsole 14 in die Schließeinheit 10 eingeschoben. Die Konsole 14 ist an der der Einschubseite gegenüberliegenden Seite der Schließanlage 10 angebracht. An der Anlageplatte 21 sind Zentriersegmente 41 zu erkennen, die während des Einfahrens einen ausreichenden Abstand zur festen Aufspannplatte 11 aufweisen.

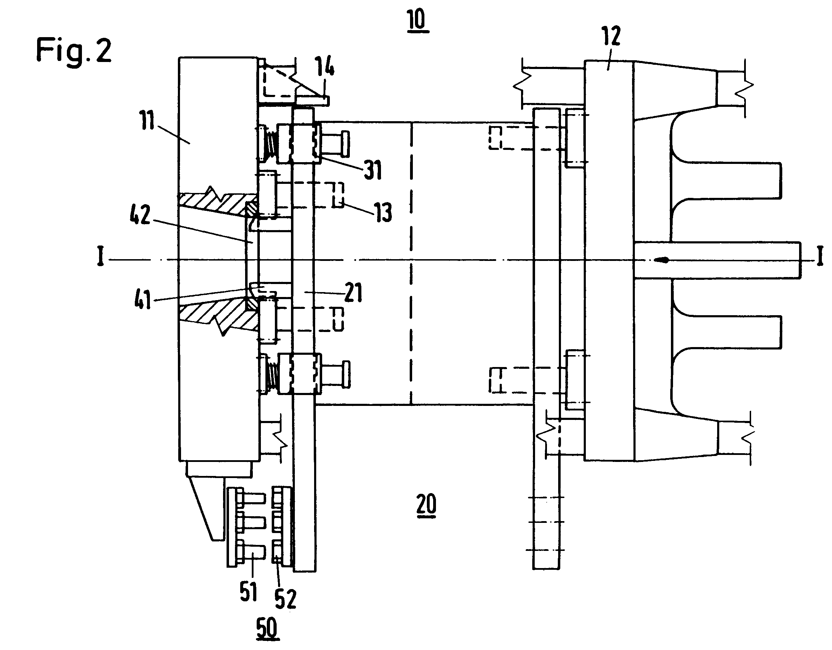

Fig. 2 zeigt, daß während der Zufahrbewegung der Schließeinheit 10 zwischen den Führungsklauen 31 und der Werkzeuganlageplatte 21 mindestens so lange Formschluß besteht, bis die Zentriersegmente 41 am Werkzeugblock 20 in die Zentrierbohrung 42 der maschinenseitigen Aufspannplatte 11 eingetaucht sind. Eine Schrägstellung des Werkzeugblocks 20 bezüglich der Maschinenhauptachse I über die gesamte Phase Zufahrbewegung wird hiermit verhindert.

Erst nach Eintauchen der Zentriersegmente 41 wird der Formschluß zwischen den Führungsklauen 31 und der Werkzeuganlageplatte 21 aufgehoben. Dies geschieht zwangsgesteuert aufgrund geneigter Bewegungsachse. Der Werkzeugblock 20 ruht aufgrund seines Gewichtes sicher auf den Auflagekonsolen 13.

In der Fig. 3 wird der Werkzeugblock 20 durch die Aufspannplatten 11 und 12 geklemmt. Nach Aufhebung des Formschlusses zwischen der Führungsklaue 31 und der Werkzeuganlageplatte 21 kann diese unter die kürzeren Flanken 38 der Führungsklaue 31 hindurch an die feste Aufspannplatte 11 geschoben werden. Ist eine beiderseitige Plattenberührung 11, 21 hergestellt, kann das Werkzeug 20 gespannt werden, und der Werkzeugeinbau ist somit beendet.

Die Energieversorgungskupplung 50 wird in dieser Phase gekuppelt, u.z. ebenfalls zwangsgesteuert.

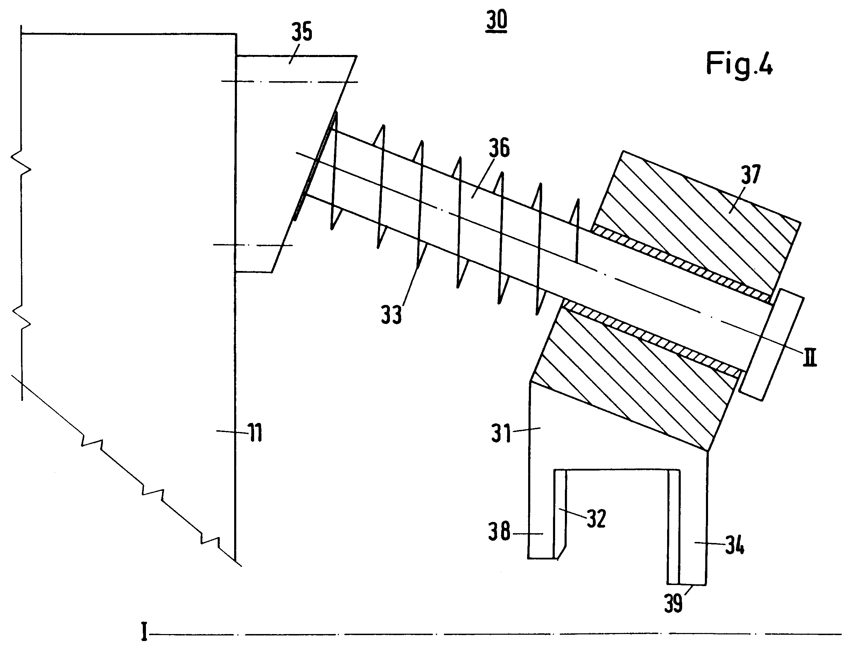

Das Detailbild der Fig. 4 zeigt die feste Aufspannplatte 11, an der eine Montageplatte 35 befestigt ist. An der Montageplatte 35 ist ein Führungsbolzen 36 befestigt. Die lage des Bolzens 36 ist so gewählt, daß die Bolzenachse II zur Maschinenhauptachse I einen Winkel zwischen 10 bis 25 Grad bildet, u.z. von dem Werkzeugblock wegweisend. Den Bolzen 36 umgreifend ist ein Gleitstück 37 angeordnet, das koaxial zum Bolzen bewegbar ist und über eine Druckfeder 33 zum kopfseitigen Ende des Bolzens 36 gedrückt wird.

An dem Gleitstück 37 ist eine Führungsklaue 31 vorgesehen, deren von der Aufspannplatte wegweisende Flanke 34 länger ist als die zur Spannplatte weisende Flanke 38. An der kürzeren Flanke 38 befindet sich eine parallel zur Maschinenhauptachse I angeordnete Stirnfläche 39.

Die Flanken 34 und 38 weisen Einführungsschrägen 32 auf, mit denen das Einfädeln der Werkzeuganlageplatte erleichtert wird.

### Positionsliste

- 10: Schließeinheit
- 11: feste Aufspannplatte
- 12: bewegliche Aufspannplatte
- 13: Auflagekonsole
- 14: Konsole
- 20: Werkzeugblock
- 21: Anlageplatte
- 30: Greifer
- 31: Führungsklaue
- 32: Einführschrägen
- 33: Druckfeder
- 34: lange Flanke
- 35: Montageplatte
- 36: Führungsbolzen
- 37: Gleitstück
- 38: kurze Flanke
- 39: Stirnfläche
- 40: Zentrierung
- 41: Zentriersegment
- 42: Zentrierbohrung
- 50: Kupplung
- 51: Nippel
- 52: Nippelgegenstück
- I: Maschinenhauptachse
- II: Bolzenachse

## Patentansprüche

1. Spritzgießmaschine mit beweglicher und fester Aufspannplatte, zwischen denen ein Werkzeuganlageplatten aufweisender Werkzeugblock zentriert einspannbar und wechselbar ist,
dadurch gekennzeichnet,
daß an der festen Aufspannplatte (11) mindestens ein Greifer (30) vorgesehen ist, der eine Führungsklaue (31) aufweist, die den Rand der Anlageplatte (21) des Werkzeugblocks (20) umgreift, und deren zur Aufspannplatte (11) zugewandte Flanke (38) im Vergleich zur abgewandten Flanke (34) kürzer ist und daß der Greifer (30) durch mechanische Mittel (36) in einer Richtung bewegbar ist, die linear im wesentlichen in Richtung fester Aufspannplatte (11) und von der Mittenachse I wegweist.

2. Spritzgießmaschine nach Anspruch 1,
dadurch gekennzeichnet,
daß an der kürzeren Flanke (38) des Greifers (30) eine senkrecht zur Außenseite der festen Aufspannplatte (11) angeordnete eine Gleitreibung zulassende Stirnflächen (39) vorgesehen ist.

3. Spritzgießmaschine nach Anspruch 2,
dadurch gekennzeichnet,
daß die Mündung der Führungsklaue (31) Einführungsschrägen (32) aufweist.

4. Spritzgießmaschine nach den Ansprüchen 2 und 3,
dadurch gekennzeichnet,
daß die Führungsklaue (31) an einem Gleitstück (37) angeordnet ist, durch welches gleitend ein Bolzen (36) führbar ist.

5. Spritzgießmaschine nach Anspruch 4,
dadurch gekennzeichnet,
daß der Führungsbolzen (36) in einem Winkel von 10 bis 25 Grad zur Mittenachse 1 hin angeordnet ist.

## Claims

1. Injection moulding machine with a mobile and a stationary clamping plate, between which plates a mould block comprising mould contact plates can be clamped in a centred manner and changed, characterised in that at least one gripper (30) is provided on the stationary clamping plate (11), which gripper comprises a guide claw (31) which embraces the edge of the contact plate (21) of the mould block (20) and whose side (38) which faces the clamping plate (11) is shorter than the remote side (34), and that the gripper (30) can be moved by mechanical means (36) in a direction which points in a straight line essentially in the direction of the stationary clamping plate (11) and away from the centre axis I.

2. Injection moulding machine according to claim 1, characterised in that an end face (39), which is disposed perpendicularly to the outside of the stationary clamping plate (11) and permits sliding friction, is provided on the shorter side (38) of the gripper (30).

3. Injection moulding machine according to claim 2, characterised in that the opening of the guide claw (31) has lead-in bevels (32).

4. Injection moulding machine according to claims 2 and 3, characterised in that the guide claw (31) is disposed on a slide part (37), through which a pin (36) can be guided in a sliding manner.

5. Injection moulding machine according to claim 4, characterised in that the guide pin (36) is disposed at an angle of 10 to 25 degrees to the centre axis I.

## Revendications

1. Presse d'injection comportant des plateaux de fixation, mobile et fixe, entre lesquels peut être tendu et changé un bloc d'outil comportant une plaque de réception d'outil, caractérisée en ce que sur la plaque de fixation fixe (11) est prévu au moins un preneur (30) comportant une griffe de guidage (31), qui entoure le bord de la plaque de réception (21) du bloc d'outil (20), et dont le flanc (38) en regard de la plaque de fixation (11) est plus court que le flanc (34) opposé, et en ce que le preneur (30) peut être déplacé par des moyens mécaniques (36) dans une direction qui s'écarte linéairement essentiellement de la direction de la plaque de fixation fixe (11) et de l'axe central I.

2. Presse d'injection selon la revendication 1, caractérisée en ce que sur le flanc (38) le plus court du preneur (30) est prévue une face frontale (39), agencée orthogonalement par rapport à la face externe de la plaque de fixation fixe (11) et permettant une friction de glissement.

3. Presse d'injection selon la revendication 2, caractérisée en ce que l'embouchure de la griffe de guidage (31) comporte des biseaux d'introduction (32).

4. Presse d'injection selon les revendications 2 et 3, caractérisée en ce que la griffe de guidage (31) est agencée sur une pièce de glissement (37), à travers laquelle peut être guidé par glissement un tourillon (36).

5. Presse d'injection selon la revendication 4, caractérisée en ce que le tourillon de guidage (36) est agencé avec un angle de 10 à 25° par rapport à l'axe central.
